# EUROPEAN PATENT SPECIFICATION

(11) **EP 0 328 900 B1**
(45) Date of publication and mention of the grant of the patent: **26.03.1997**
(21) Application number: 89101096.9
(22) Date of filing: 23.01.1989
(51) Int. Cl.: G06F 17/21, G06T 11/60

(54) **Method and apparatus for editing documents**
Verfahren und Gerät zur Aufbereitung von Dokumenten
Méthode et appareil pour éditer des documents

(30) Priority: 21.01.1988 JP 9586/88
(43) Date of publication of application: 23.08.1989
(73) Proprietor: KABUSHIKI KAISHA TOSHIBA, Kawasaki-shi, Kanagawa-ken 210 (JP)
(72) Inventor: Fukui, Mika, Yokohama-shi Kanagawa-ken (JP); Iwai, Isamu, Kawasaki-shi Kanagawa-ken (JP); Doi, Miwako, Kawasaki-shi Kanagawa-ken (JP); Takebayashi, Yoichi, Yokohama-shi Kanagawa-ken (JP)
(74) Representative: Lehn, Werner, Dipl.-Ing.

(56) References cited:
- EP-A- 0 250 677
- PATENT ABSTRACTS OF JAPAN vol. 9, no. 304 (P-409)(2027) 30 November 1985 & JP- A-60 136 861

## Description

### Field of the Invention

The present invention relates to a method and an apparatus for editing documents which edits a document such that its elements are properly put together and arranged.

### Description of the Background Art

Lately, a number of propositions have been made of a pattern generator utilizing a computer capable of generating patterns from a variety of data such as graphic data, image data, and color data, for the purpose of preparing such things as presentation documents, public announcements, or brochures. And along with such pattern generators, there are various types of multi-functional editors for editing data obtained from any one of plurality of source media being developed.

Yet, such a multi-functional editor becomes progressively complicated in order to accommodate diverse commands and functions as the number of types of data it deals with increases. As a result, mastering of skillful maneuvers of such a multi-functional editor to be able to take full advantage of its superior faculty tends to require an enormous amount of trainings, and even with such skills it is often necessary to spend a great deal of efforts and time in dealing with a complicated situation.

On the other hand, there are some propositions of a document editing systems which edit a given document in prescribed manners automatically by analyzing logical and referential structures of the document, such as one reported by I. Iwai, M. Doi, and M. Fukui in "On the document structure generating function of the intelligent document editing system" appearing in 'The proceedings of the 34th general conference of the Japanese society of information processing', pp.1309-1310, 1987, and that disclosed in Japanese patent application No. No.S61-21570(1986) in which corresponding descriptions and drawings are put together automatically in the same page by means of a referential word in the descriptions.

However, such a document editing system so far has not been able to produce a satisfactory result with respects to orderliness because of the lack of coherence and balance among various data from different sources. Consequently, it has conventionally been necessary to perform very complicated editing operations in order to achieve satisfactory results in such respects.

Correct heading for a document is determined according the teaching of EP-A-250677.

### SUMMARY OF THE INVENTION

It is therefore an object, as claimed, of the present invention to provide a method and an apparatus for editing documents capable of producing satisfactorily well ordered document automatically.

According to one aspect of the present invention there is provided a method for editing a document containing plurality of elements, comprising the steps of: (a) extracting characteristic quantities which characterizes different elements of the document; (b) deriving relationships among the different elements of the document in accordance with the characteristic quantities; (c) determining layout of the different elements of the document in accordance with the relationships; and (d) processing document in accordance with the layout.

According to another aspect of the present invention there is provided an apparatus for editing a document containing plurality of elements, comprising: means for extracting characteristic quantities which characterizes different elements of the document; means for deriving relationships among the different elements of the document in accordance with the characteristic quantities; means for determining layout of the different elements of the document in accordance with the relationships; and means for processing document in accordance with the layout.

Other features and advantages of the present invention will become apparent from the following description taken in conjunction with the accompanying drawings.

### BRIEF DESCRIPTION OF THE DRAWINGS

Fig. 1 is a block diagram of one embodiment of a document editor according to the present invention.

Fig. 2 is a flow chart of the operation of the document editor shown in Fig. 1.

Fig. 3 is an illustration of elements of an exemplary document to be edited by the document editor shown in Fig. 1.

Fig. 4 is a tabulated illustration of a content of a characteristics memory of the document editor shown in Fig. 1.

Fig. 5 is an illustration for explaining one type of characteristics extraction by the document editor shown in Fig. 1.

Fig. 6 is an illustration of a content of a key word dictionary in a characteristic extraction unit of the document editor shown in Fig. 1.

Fig. 7 is an illustration of physical relationship extraction rules in a relationship extraction rule dictionary of the document editor shown in Fig. 1.

Fig. 8 is an illustration of structural relationship extraction rules in a relationship extraction rule dictionary of the document editor shown in Fig. 1.

Fig. 9 is an illustration of denotative relationship extraction rules in a relationship extraction rule dictionary of the document editor shown in Fig. 1.

Fig. 10 is a tabulated summary of results of the characteristics extraction for the exemplary document shown in Fig. 3.

Fig. 11 is an illustration of a content of a document editing rule dictionary of the document editor shown in Fig. 1.

Fig. 12 is an illustration of one document editing rule in the document editing rule dictionary.

Fig. 13 is an illustration of another document editing rule in the document editing rule dictionary.

Fig. 14 is a sequential illustration of document being edited by the document editor shown in Fig. 1.

Fig. 15 is an illustration of possible layouts of document for different circumstances.

Fig. 16 is an illustration of one layout of document obtainable by one modification of the operation shown in Fig. 2.

Fig. 17 is an illustration of another layout of document obtainable by another modification of the operation shown in Fig. 2.

Fig. 18 is an illustration of a content of the key word dictionary for explaining a certain modification of the operation shown in Fig. 2.

Fig. 19 is an illustration of a content of a meaning extraction dictionary to be utilized in the certain modification of the operation.

Fig. 20 is an illustration of elements of a document to be edited in the certain modification of the operation

### DETAIL DESCRIPTION OF THE PREFERRED EMBODIMENTS

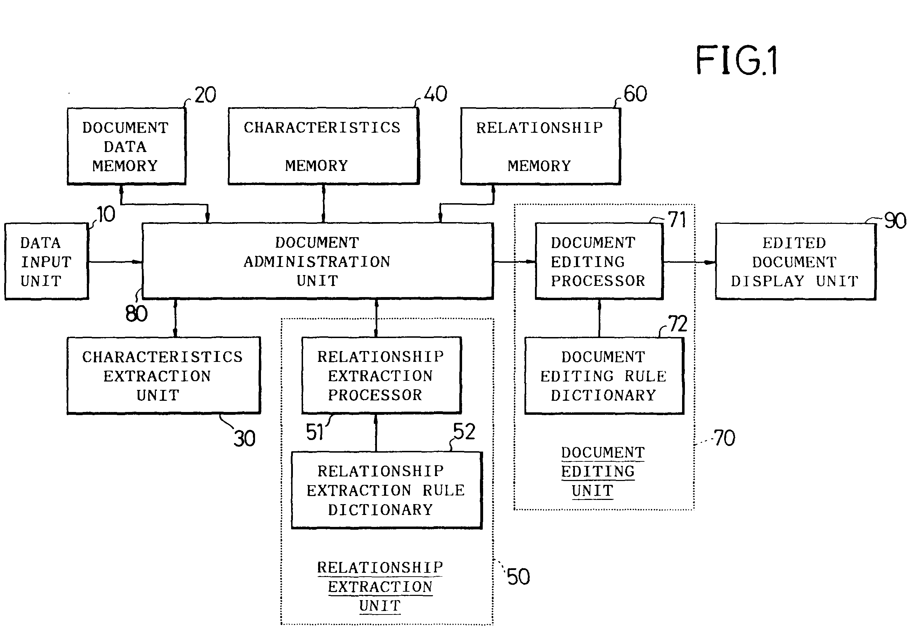

Referring now to Fig. 1, there is shown one embodiment of a document editor according to the present invention.

This document editor is comprised of the following.

A data input unit 10 is provided for input of document data which contain elements such as article data, graphic data, and image data which are classified according to distinct physical, structural, and denotative characteristics of different parts of a document to be edited. This data input unit may take a form of a keyboard, a mouse, a scanner, a disk device, or any combination thereof.

A document data memory 20 memorizes the document data entered at the data input unit 10.

A characteristics extraction unit 30 extracts characteristic quantities such as physical characteristics, structural characteristics, and denotative characteristics from the document data stored in the document data memory 20. The physical characteristics here are given as numerical data obtained from numbers indicating such quantities like a number of lines, a number of words, and a blank area ratio. The structural characteristics here are given as another numerical data indicating such quantities like header positions, article positions, a number of sections, and positions and sizes of the graphics which are obtainable by morphemic analysis of the document. The denotative characteristics here are given as still another numerical data indicating addresses of key words, extracted by contextual analysis of the document from titles, headers, and articles, in a key word dictionary which stores them collectively.

A characteristics memory 40 memorizes the characteristic quantities obtained by the characteristics extraction unit 30.

A relationship extraction unit 50 for extracting relationships among different elements of the document data such as referential relationships, physical relationships, structural relationships, and denotative relationships, in accordance with the characteristic quantities stored in the characteristics memory 40, comprises a relationship extraction processor 51 which carries out the extraction of these relationships and a relationship extraction rule dictionary 52 which stores rules to be applied in a process of relationship extraction. The referential relationships here are those relationships between graphics and key words in articles which indicate references to these graphics. The physical and structural relationships here are such relationships as similarities and resemblances, and the denotative relationships here are such relationships as parallels, contrasts, inclusions, and equivalences.

A relationship memory 60 memorizes the relationships extracted by the relationship extraction unit 50.

A document editing unit 70 for arranging related elements of the document data in prescribed layout pattern, in accordance with the relationships stored in the relationship memory 60, comprises a document editing processor 71 which carries out editing of the document, and a document editing rule dictionary 72 which stores rules to be applied in a process of document editing.

A document administration unit 80 administers flows of various data among those components of this document editor mentioned so far.

Lastly, the edited document display unit 90 displays a document given by the document data edited by the document editing unit 70. This edited document display unit 90 may take a form of a CRT display, a projector, or a printer.

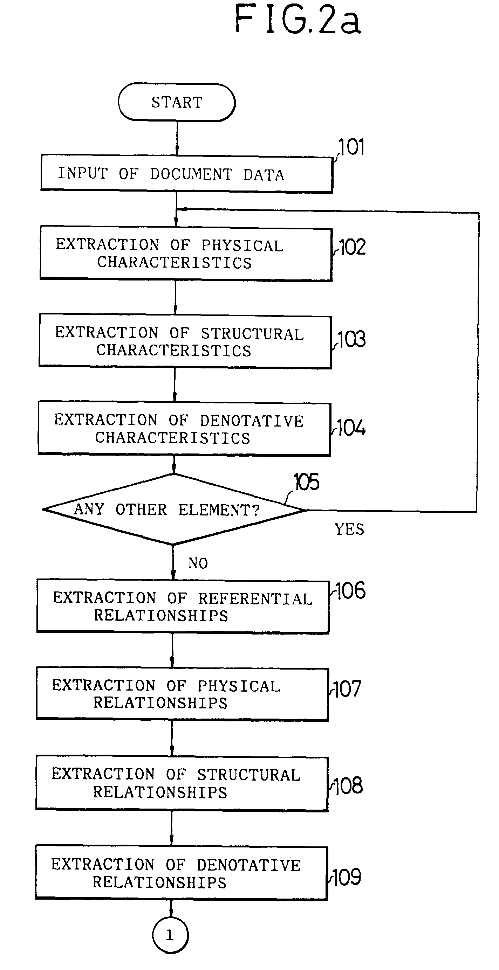

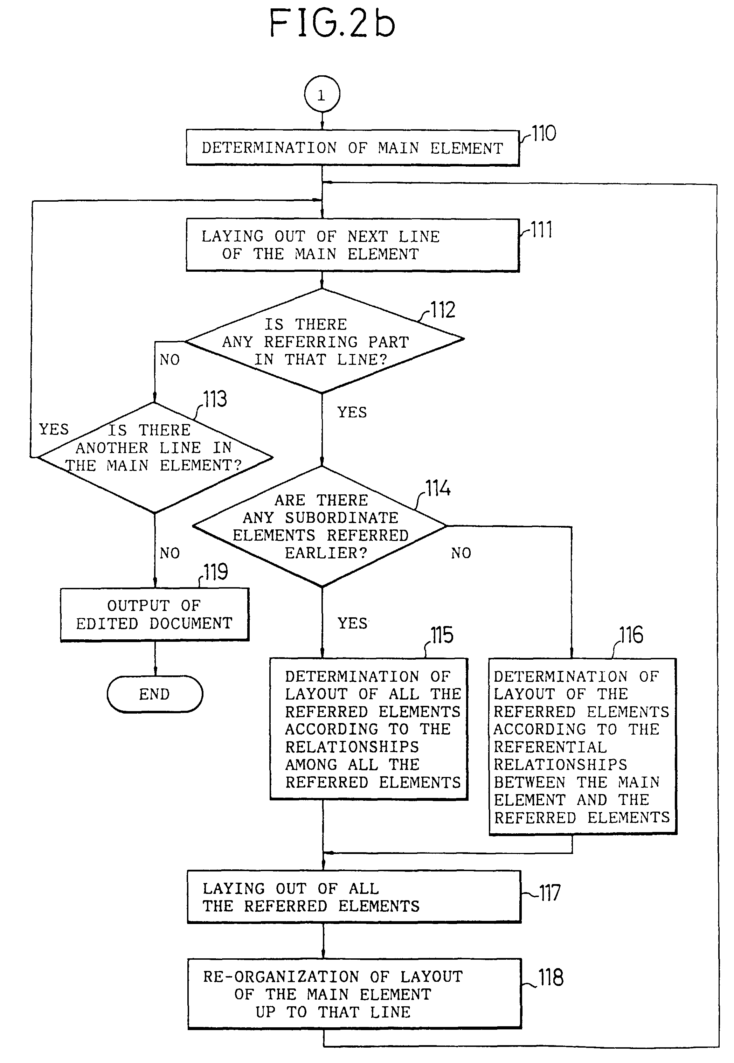

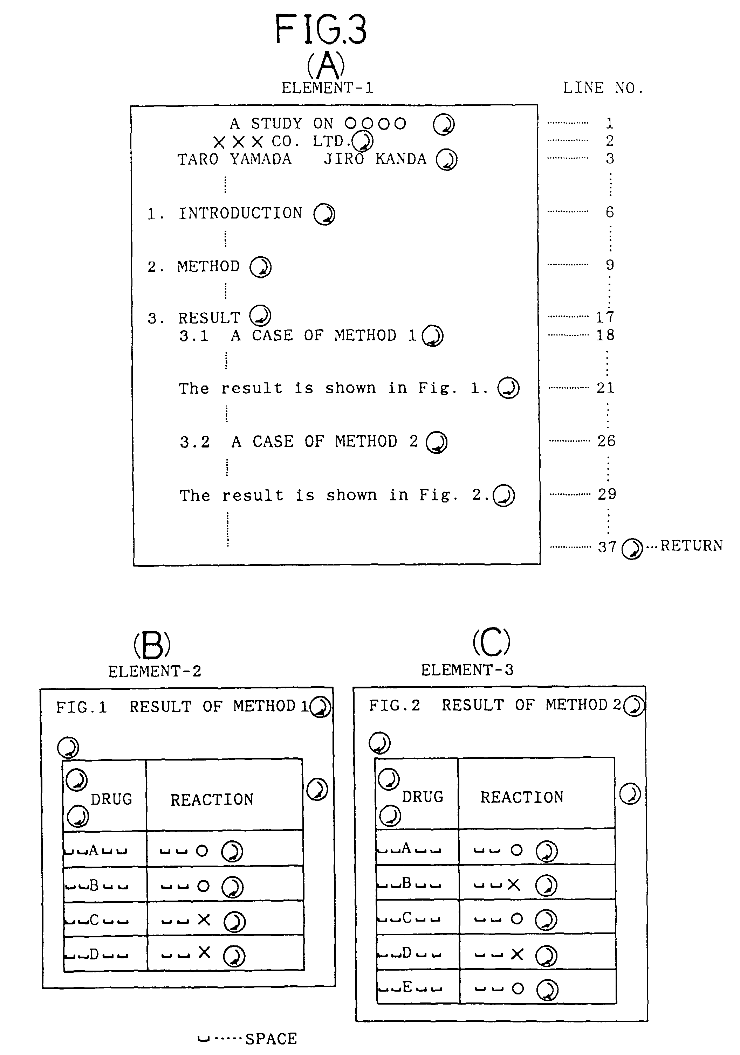

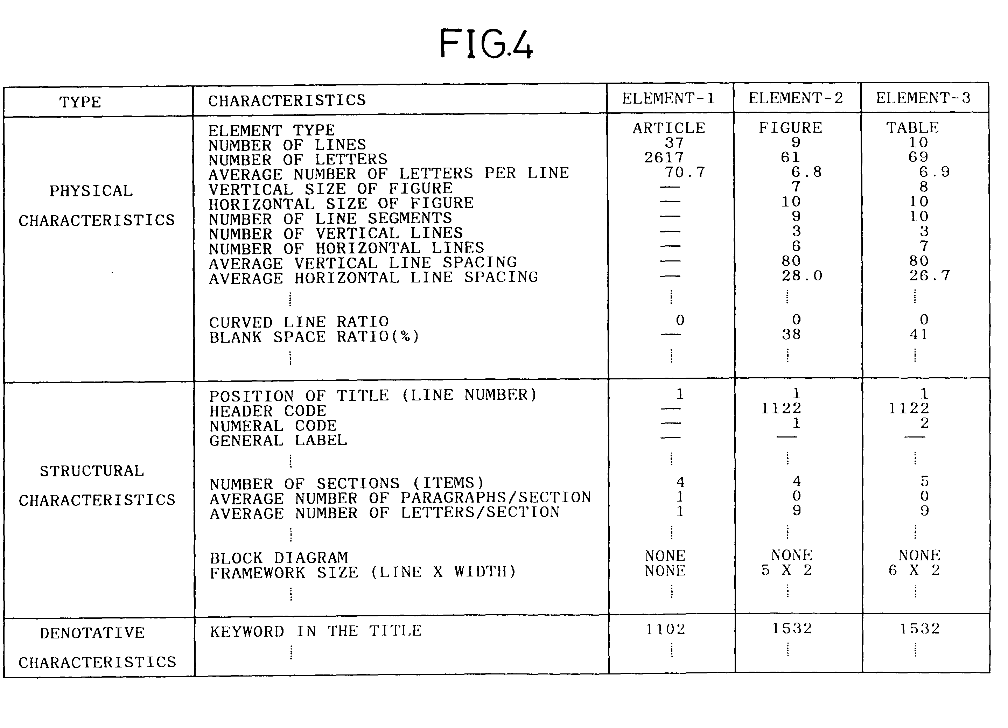

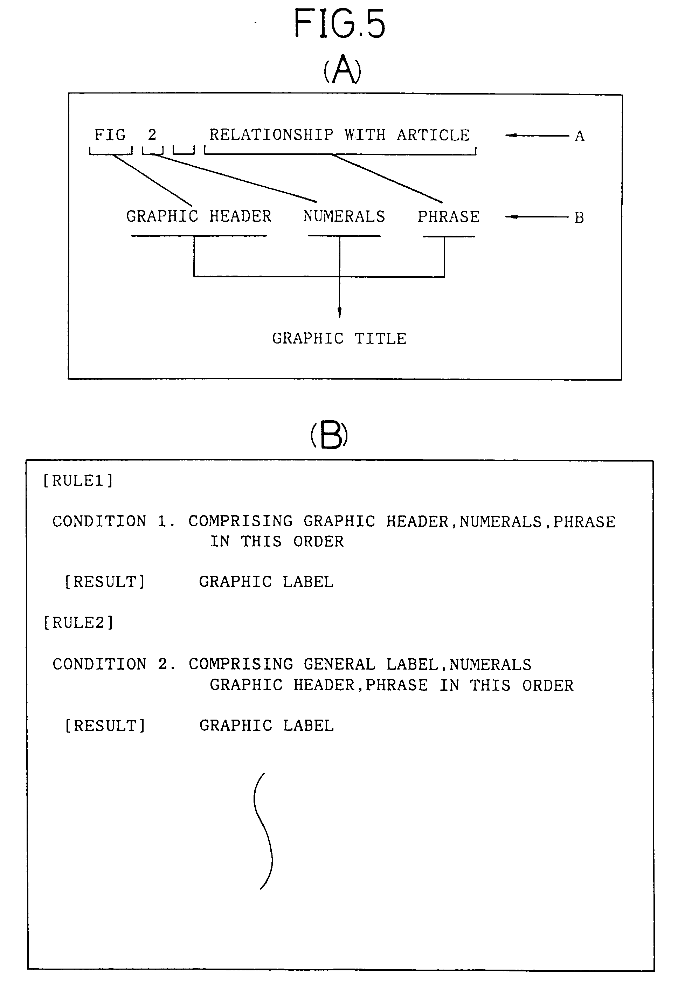

Referring now to Fig. 2, the operation of this document editor will be explained with subsidiary references to Figs. 3 to 20.

In the following, the explanation will be given for an exemplary case of editing a document comprising elements shown in Figs. 3(A), 3(B), and 3(C). A element-1 shown in Fig. 3(A) is an article data, whereas element-2 and element-3 shown in Figs. 3(B) and 3(C), respectively, are graphic data, and there are references made in the article of the element-1 to the graphics of the element-2 and element-3 at the line 21 and the line 29, respectively.

At the step 101, document data representing these elements of the document to be edited are entered from the data input unit 10 and are stored in the document data memory 20.

Then, at the step 102, the document data stored in the document data memory 20 are given to the characteristics extraction unit 30 by the document administration unit 80, and various physical characteristics are extracted from the document data. Namely, as shown in Fig. 4, various characteristics such as element type, number of lines, number of letters, average number of letters, etc. are extracted from each elements of the document data. The extracted physical characteristics are stored in the characteristics memory 40.

Next, at the step 103, the characteristics extraction unit 30 extracts various structural characteristics such as position of title( line number), header code, numeral code, etc. from each elements of the document data, as shown in Fig 4. For example, to extract the position of title, a sentence shown in line A in Fig. 5(A) is broken up into portions such as graphic header, numerals, and phrase which belong to different categories, by means of the pattern matching with a graphic header dictionary not shown, and then rules for graphic titles shown in Fig. 5(B) is applied. Since the sentence is comprised of a graphic header, numerals, and phrase in this order, the rule 1 in Fig. 5(B) applies and the sentence is recognizes as a graphic title. Then the position of this sentence is determined which can be identified as the position of title. The extracted structural characteristics are also stored in the characteristics memory 40.

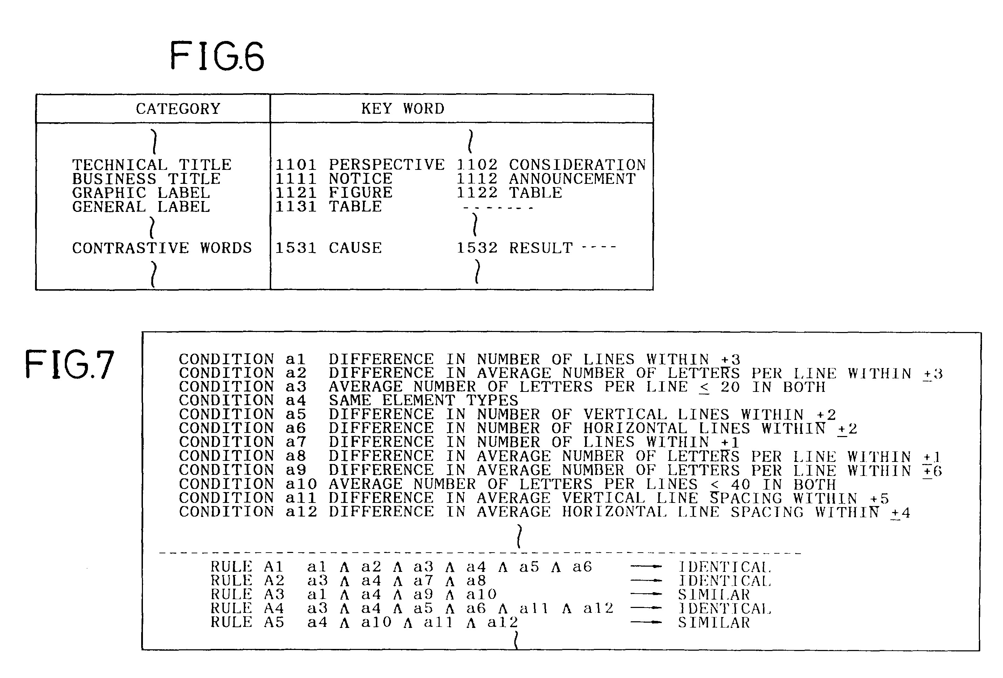

Next, at the step 104, the characteristics extraction unit 30 extracts various denotative characteristics such as key word in the title, as shown in Fig. 4. The key word in the title, for example, are extracted by searching words registered in a key word dictionary shown in Fig. 6, and will be identified by code of four digits accompanying each word. The extracted denotative characteristics are also stored in the characteristics memory 40.

The step 105 ensures that the characteristics extractions at the steps 102 to 104 are carried out for all the elements of the document data.

Next, at the step 106, the the document data stored in the document data memory 20 are given to the relationship extraction unit 50 by the document administration unit 80, and referential relationships between the articles of the element-1 and the graphics of the element-2 and the element-3 are extracted. This is done by searching the words indicative of the referential relationship such as 'Table 1' in the line 21 and 'Table 2' in the line 29.

Then, at the step 107, the physical characteristics stored in the characteristics memory 40 are given to the relationship extraction unit 50 by the document administration unit 80, and physical relationships among the elements of the document data are extracted. This is done by utilizing physical relationship extraction rules stored in the relationship extraction rule dictionary 52 which are shown in Fig. 7. Namely, the relationship extraction processor 51 examines physical characteristics of each different pair formed by two of the elements to determine which of the conditions a1, a2, a3, etc. in the physical relationship extraction rules shown in Fig. 7 are satisfied by this pair, and determines appropriate physical relationships such as identical and similar according to the rules A1, A2, A3, etc. in the physical relationship extraction rules. In Fig. 7, a symbol Λ stands for 'and' so that the rule A1 means when all the conditions a1,a2,a3,a4,a5 and a6 are satisfied together, the physical relationship is 'identical'. The extracted physical relationships are stored in the relationship memory 60.

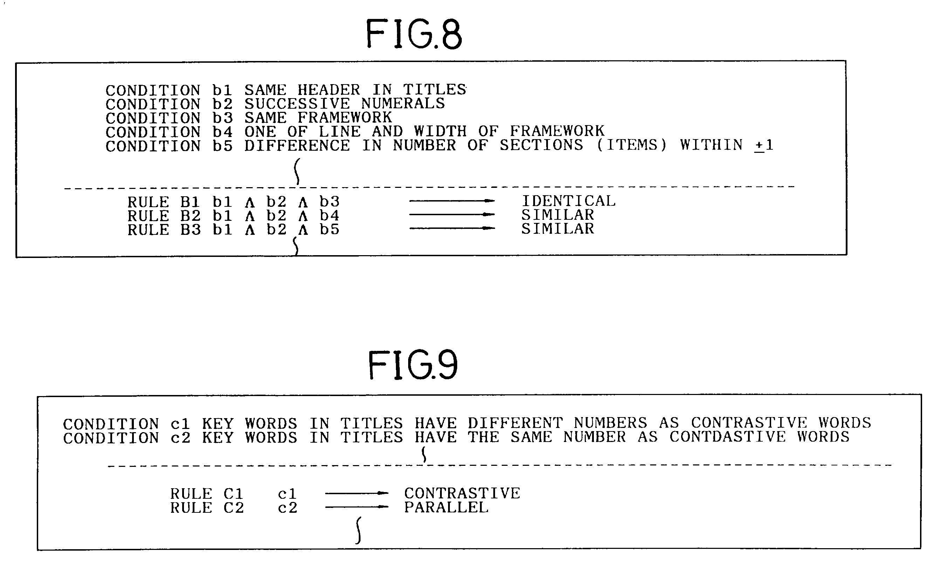

Next, at the step 108, the structural characteristics stored in the characteristics memory 40 are given to the relationship extraction unit 50 by the document administration unit 80, and structural relationships among the elements of the document data are extracted. This is done by utilizing structural relationship extraction rules stored in the relationship extraction rule dictionary 52 which are shown in Fig. 8. Namely, the relationship extraction processor 51 examines structural characteristics of each different pair formed by two of the elements to determine which of the conditions b1, b2, b3, etc. in the structural relationship extraction rules shown in Fig. 8 are satisfied by this pair, and determines appropriate structural relationships such as identical and similar according to the rules B1, B2, B3, etc. in the structural relationship extraction rules. Here, a symbol Λ again stands for 'and' so that the rule B1 means when all the conditions bl, b2, and b3 are satisfied together, the structural relationship is 'identical'. The extracted structural relationships are also stored in the relationship memory 60.

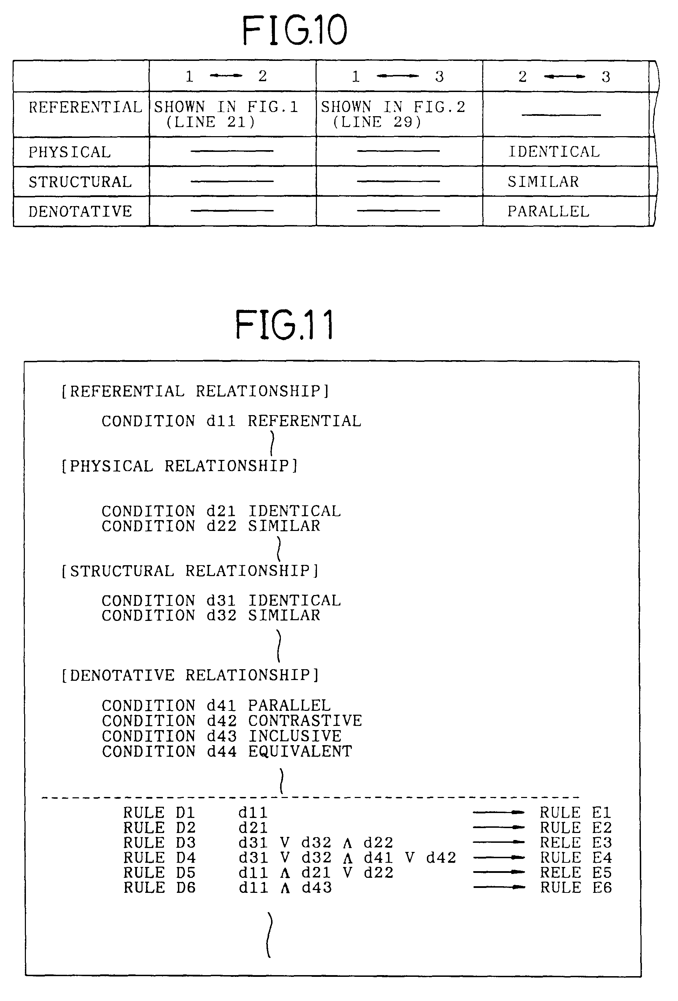

Next, at the step 109, the denotative characteristics stored in the characteristics memory 40 are given to the relationship extraction unit 50 by the document administration unit 80, and denotative relationships among the elements of the document data are extracted. This is done by utilizing denotative relationship extraction rules stored in the relationship extraction rule dictionary 52 which are shown in Fig. 9. Namely, the relationship extraction processor 51 examines denotative characteristics of each different pair formed by two of the elements to determine which of the conditions c1, c2, etc. in the denotative relationship extraction rules shown in Fig. 9 are satisfied by this pair, and determines appropriate denotative relationships such as contrastive and parallel according to the rules C1, C2, etc. in the denotative relationship extraction rules. The extracted denotative relationships are also stored in the relationship memory 60.

The result of the relationship extractions performed for the element-1, the element-2, and the element-3 of Figs. 3(A), 3(B), and 3(C) is shown in Fig. 10. As shown, there are referential relationships between the element-1 and th element-2, and between the element-1 and the element-3. Also, the graphics of the element-2 and the element-3 have a physical relationship 'identical', a structural relationship 'similar', and a denotative relationship 'parallel' because of the rule A1 in Fig. 7, the rule B2 in Fig. 8, and the rule C2 in Fig. 9, respectively.

At this point, the document data stored in the document data memory 20 and the relationships stored in the relationship memory 60 are given to the document editing unit 70 by the document administration unit 80 in order to carry out the actual editing of the document. This is done as follows.

First of all, at the step 110 the document editing processor determines a main element which in this example of the document data is the element-1, and subordinate elements which are referred to by the main element which in this example are the element-2 and the elemenet-3, from the referential relationships determined earlier and shown in Fig. 10.

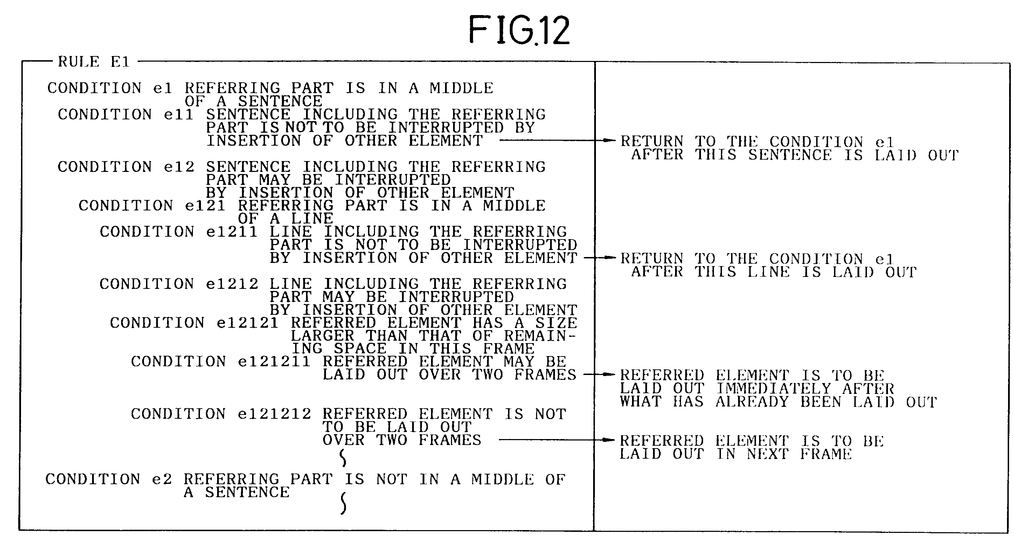

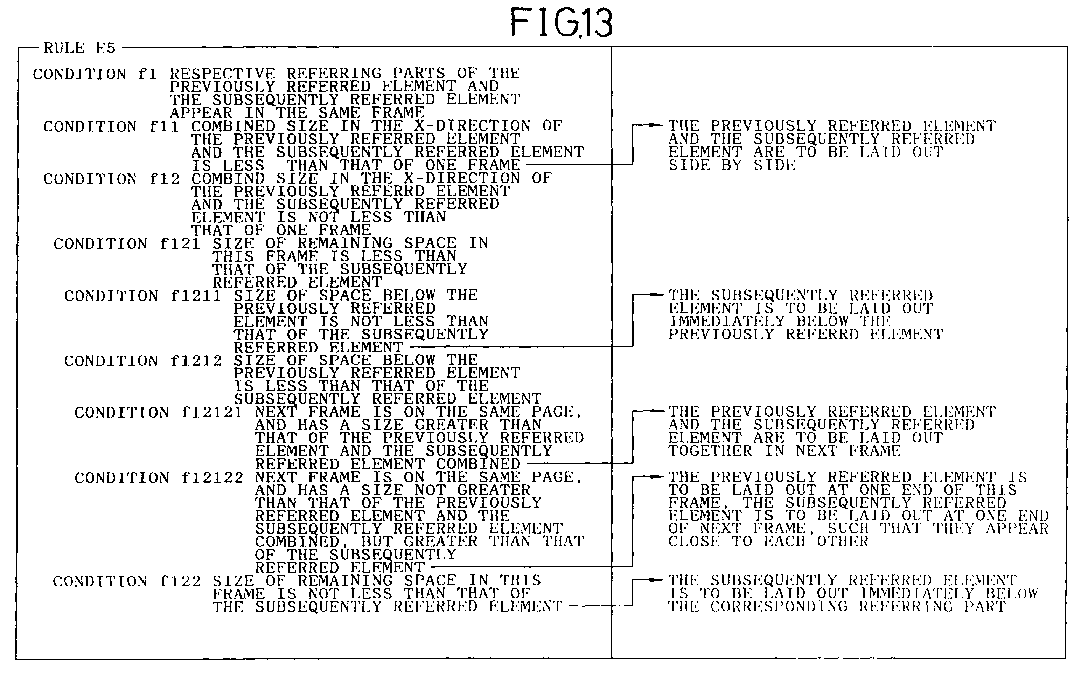

From this point on, document editing rules stored in the document editing rule dictionary 72 which is shown in Figs. 11, 12, and 13 are utilized by the document editing processor 71. Namely, whenever a reference is made from the main element to the subordinate elements, the document editing processor determines conditions in Fig. 11 which are being satisfied by the elements involved, in accordance with the relationships among the elements determined earlier, and selects an appropriate case from rules D1, D2, D3, etc. and applies one of rules E1, E2, E3, etc. indicated in carrying out the editing of the document. Only those parts of the rules E1 and E5 pertinent to the following explanation are shown in Figs. 12 and 13. In Fig. 11, a symbol Λ stands for 'and' as before, and in addition a symbol v stands for 'or' which prevails over 'and', so that the rule D3 means when either one of conditions d31 or d32, and a condition d22 are satisfied together the rule E3 is to be applied. Also, in Figs. 12 and 13, indentation and indices implies the hierarchical structure among the various conditions in an obvious manner.

Now at the step 111, one line of the main element is laid out.

At the step 112 whether there is any part of this line which makes a reference to subordinate elements (such a part will be called a referring part in the following) is determined. When there is no referring part in that line, the step 113 is taken in which whether there is another line in the main element, and the steps from the step 111 on are repeated until the last line of the main element is laid out.

On the other hand, when there is a referring part in that line, the step 114 is taken in which whether there are any subordinate elements referred earlier is determined. When there are such subordinate elements, the step 115 is taken at which the layout of all the subordinate elements referred so far, including those previously referred to and subsequently laid out, are determined according to the various relationships among these subordinate elements. Here, the previously determined layout of the previously referred subordinate elements are superseded.

On the other hand, when there is no previously referred subordinate element, the step 116 is taken at which the layout of the presently referred element is determined according to the referential relationships between the main element and the referred element.

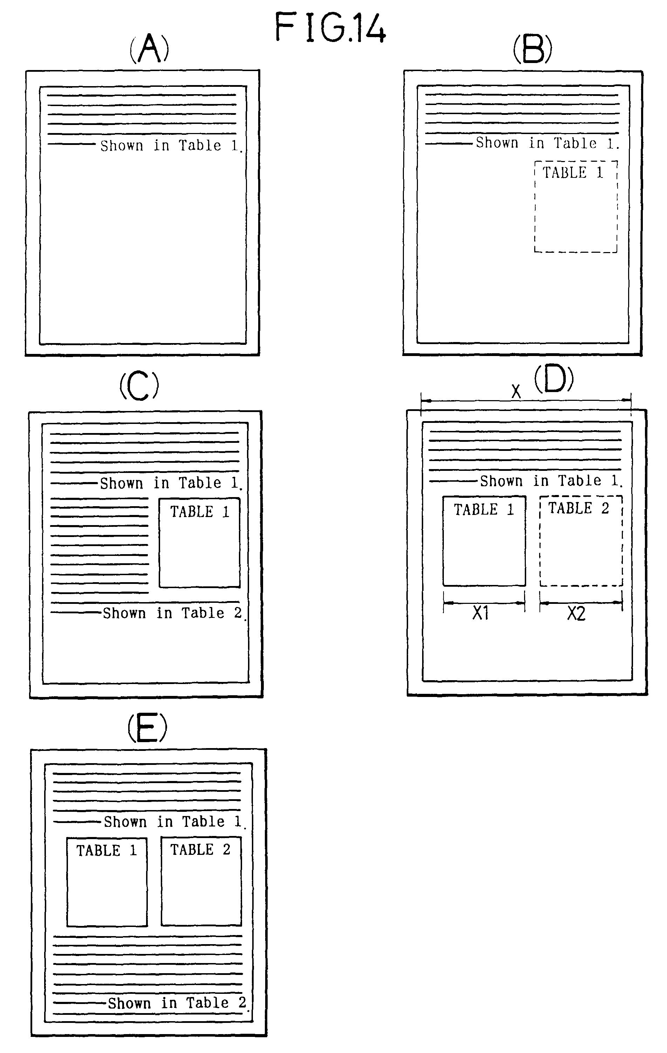

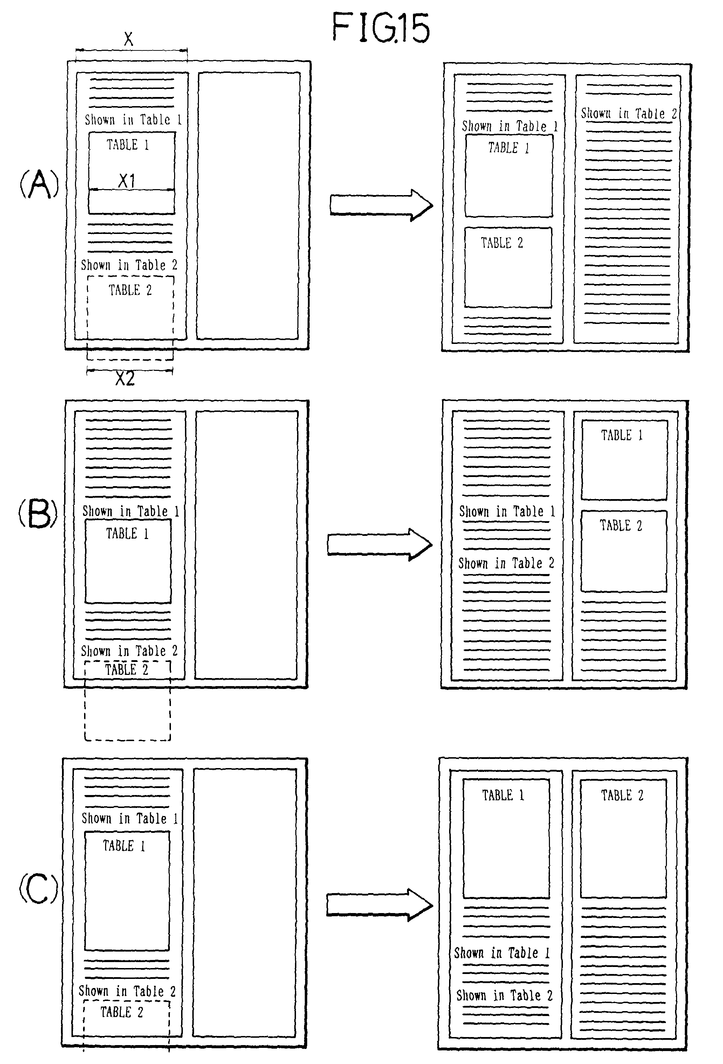

This determination of the layout of the referred elements is illustrated in Figs. 14 and 15 for the example of the document in two different circumstances.

Namely, in the first case, the lines of the element-1 are laid out until the key word 'Table 1' appears for the first time, as shown in Fig. 14(A). Since there is no previously referred subordinate element at this point, the condition d11 of Fig. 11 is the only one that is satisfied, and so according to the rule D1 of Fig. 11, the rule E1 shown in Fig. 12 applies. Consequently, the element-2 which contains the Table 1 is laid out immediately below the key word 'Table 1', as shown in Fig. 14(B). Then the layout of the lines of the element-1 is resumed until the next referring part appears which in this case is the key word 'Table 2', as shown in Fig. 14(C). Now, since the element-1 has already been referred to and laid out at this point, the rule D5 of Fig. 11 is relevant and accordingly the rule E5 shown in Fig. 13 applies. Here, the sum of the sizes x1 and x2 of the Table 1 and the Table 2, respectively, in the x-direction is less than the size X of the frame in this first case, so that the condition f11 of Fig. 13 is satisfied, and consequently the Table 1 and the Table 2 are laid out side by side, as shown in Fig. 14(D). Then, the layout of the element-1 up to this point is reorganized so that the determined layout of the subordinate elements is incorporated, as shown in Fig. 14(E).

On the other hand, in the second case, the sum of the sizes x1 and x2 of the Table 1 and the Table 2, respectively, in the x-direction is greater than the size X of the frame, although either of the size x1 and the size x2 individually is less than the size X. Thus, this case proceeds similarly to the previous one until the second referring part with the key word 'Table 2' appears. As in the previous case, since the element-1 has already been referred to and laid out at this point, the rule D5 of Fig. 11 is relevant and accordingly the rule E5 shown in Fig. 13 applies. Here, however, the condition f12 is satisfied. Therefore when the condition f1211 is further satisfied, the Table 2 is laid out immediately below the Table 1 as shown in Fig. 15(A), when the condition f12121 is further satisfied, the Table 1 and the Table 2 are laid out together in the next frame as shown in Fig. 15(B), and when the condition f12122 is further satisfied, the Table 1 is laid out at the top of that frame while the Table 2 is laid pout at the top of the next frame as shown in Fig. 15(C). Similar layout is obtainable for other cases for which the rule D3 of Fig. 11 applies such as those which are physically not identical, but structurally similar, by preparing similar rules appropriately.

After the layout has been determined either at the step 115 or at the step 116, the all the referred elements are laid out according to the determined layout at the step 117, and the layout of the document up to that line including all the subordinate elements referred so far is re-organized according to the newly determined layout of the subordinate elements at the step 118, and the process returns to the step 111.

After all the line of the main element as well as all the subordinate elements have been laid out in the manner described above, the resulting edited document is shown by the edited document display unit 90 at the step 119, and the process terminates.

As explained, according to this embodiment it is possible to edit a document to obtain a satisfactorily well ordered layout automatically.

It is to be noted that various characteristics and relationships utilized in this embodiment may be suitably altered both in number as well as in content under different circumstances without losing distinct advantages of the present invention. In particular, there are several effective modifications possible to this embodiment.

First of all, the detection of the referring part by searching of the key words at each lines followed by the determination of the layout can be replaced by the determination of the layout at each location of the referring part which is recorded from the search of the key words over the entire document carried out in advance.

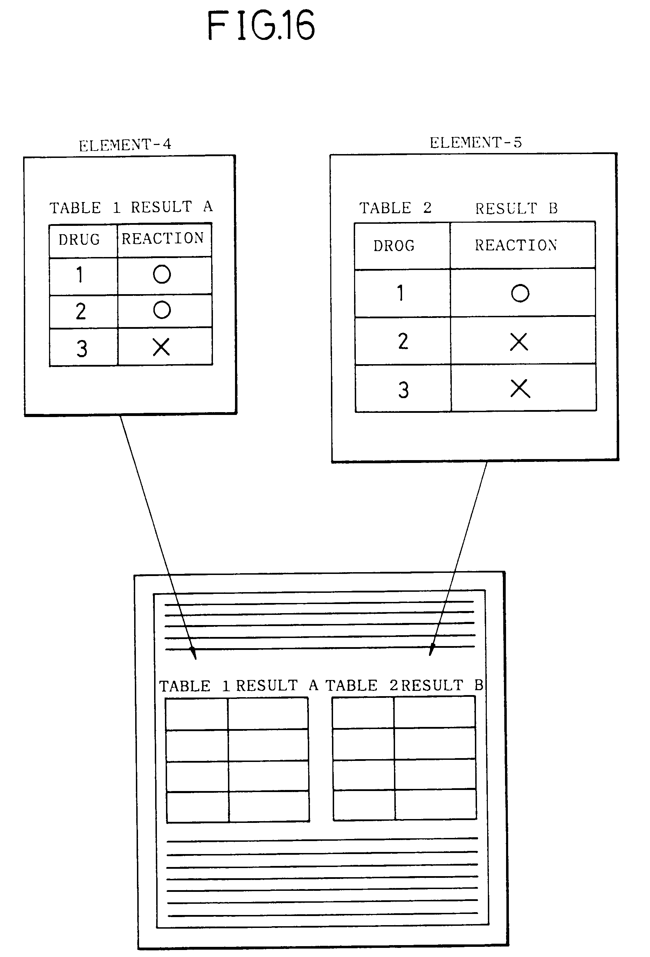

Secondly, for two subordinate elements which have different sizes but are structurally identical and denotatively related as parallel, such as an element-4 and an element-5 shown in Fig. 16, the rule D4 of Fig. 11 is applicable. Thus, by incorporating rules to select an appropriate magnifications for each element, an well balanced layout such as one shown in Fig. 16 is obtainable. Here, an additional care to regulate the magnification for letters can improve the uniformity of the layout. Also, the unsatisfactory magnifying can be prevented by judging the physical similarity in terms of the number of letters.

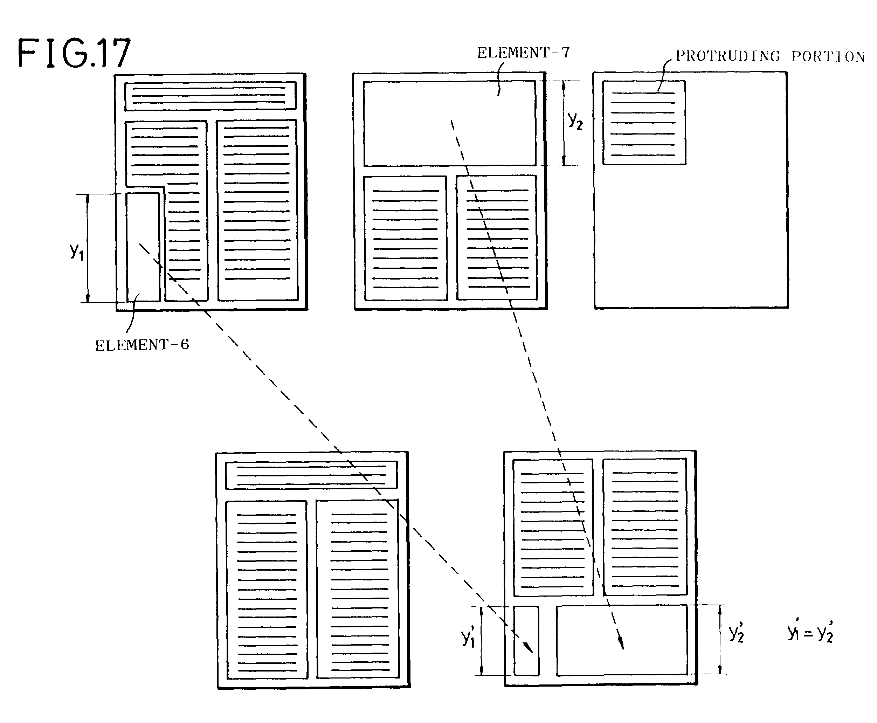

Thirdly, in a case in which a maximum number of pages are dictated, such as a conference proceedings, the incorporation of the rules to select an appropriate magnifications for each element as in the above can be utilized for adjusting the sizes of the subordinate elements such that the document can be fit into the available space. For example, when an element-6 and an element-7 shown in Fig. 17 are structurally similar and denotatively related as parallel, the rule D4 of Fig. 11 is applicable. Thus, by incorporating rules to determine an appropriate magnifications in the x-direction as well as in the y-direction for each element, such that the size y1 of the element-6 in the y-direction and the size y2 of the element-7 in the y-direction are transformed into the sizes yl' and y2' which are equal to each other, the document can be fit into the available space while maintaining the balance of the layout, as shown in Fig. 17.

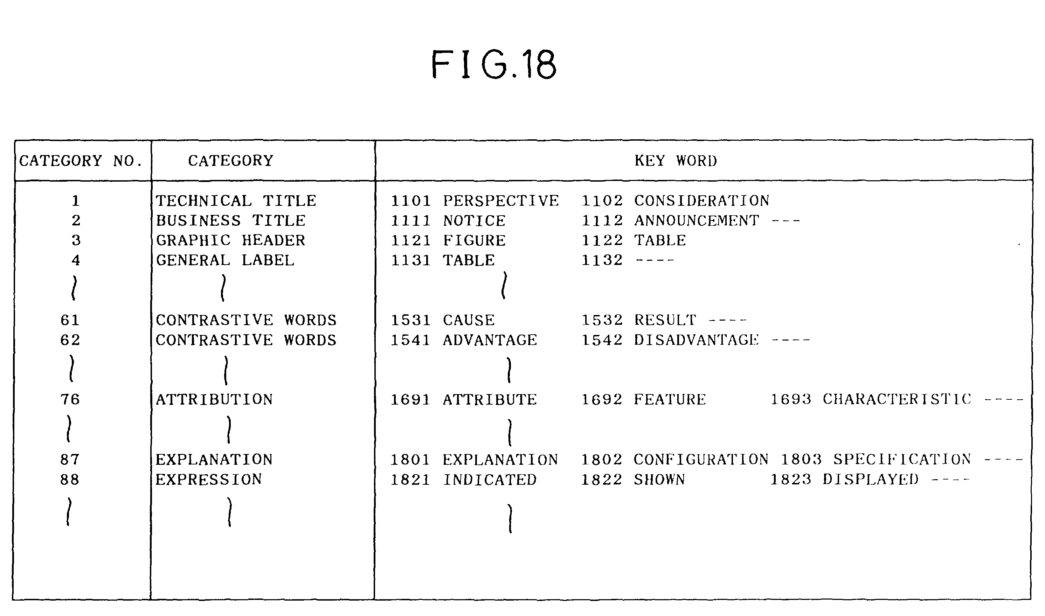

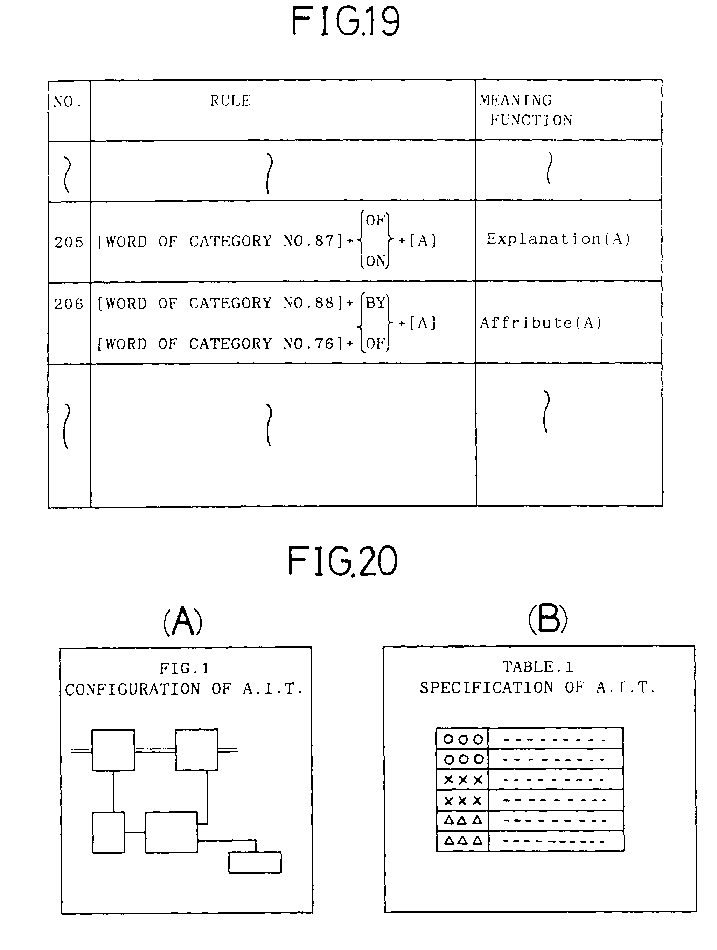

Lastly, the denotative relationships may be derived not only from the key words, but also from syntactical analysis. Namely, when the key word dictionary in the relationship extraction rule dictionary 52 is as shown in Fig. 18 where each category is associated with distinct category number, the relationship extraction rule dictionary 52 may be installed of a meaning extraction dictionary as shown in Fig. 19 which determines a meaning functions indicating the meaning of an element by a kind of syntactical analysis consisting of matching between the category number of the extracted key word and stored grammatical rules given in terms of prepositions and likes. In this meaning extraction dictionary of Fig. 19, a variable represented by a symbol [ A ] is to be filled by a phrase from the element. Thus, for example, with respect to an element shown in Fig. 20(A), a key word to be extracted is 'configuration' which belongs to the category number 87 according to the key word dictionary of Fig. 18, and a phrase to fill in a variable is 'A.I.T.' so that a rule 205 in the meaning extraction dictionary of Fig. 19 is applied with A being 'A.I.T.' to obtain an appropriate meaning function 'Explanation( A.I.T.)'. Similarly, a meaning function for another element shown in Fig. 20 can be determined also as 'Explanation( A.I.T.)', so that a fact that these two elements have similar meaning can be derived and appropriate cares can be taken in determining their layout such as 'to be arranged side by side' or 'to be arranged close by'.

Besides these, many modifications and variations of this embodiment may be made without departing from the novel and advantageous features of the present invention. Accordingly, all such modifications and variations are intended to be included within the scope of the appended claims.

## Claims

1. A system for editing a document containing sentence elements and figure elements, comprising
input means (10) for inputting data of sentence elements and figure elements of the document;
layout determining means (70) for determining layout position and size of figure elements of the document with respect to already laid-out parts of the sentence elements and the figure elements; and
processing means (71) for processing said data of the document inputted through the input means (10), in accordance with the layout position and size determined by the layout determining means (70);
**characterized by**
first data extracting means (30) for automatically extracting characteristic data characterizing each of the figure elements of the document, from said data of the figure elements inputted through the input means (10); and
second data extracting means (50) comprising a relationship extraction processor (51) and a relationship extraction rule dictionary (52), for automatically extracting:
referential relationship data indicating a position in each sentence element of a referencing expression which refers to one of the figure elements, and said one of the figure elements referred by the referencing expression, by searching the referencing expression in said data of the sentence elements inputted through the input means (10), and
figure-element relationship data indicating relationships of each figure element with respect to the other figure elements, by using the characteristic data extracted by the first data extracting means (30) and prescribed relationship extraction rules stored in said relationship extraction rule dictionary (52) and specifying the relationships in terms of conditions on the characteristic data;
wherein the layout determining means (70) which comprises a document editing processor (71) and a document editing rule dictionary (72), automatically determines the layout position and size of figure elements of the document with respect to already laid-out parts of the sentence elements and the figure elements, by using the referential relationship data and the figure-element relationship data extracted by the second data extracting means (50) and prescribed document editing rules stored in said document editing rule dictionary (72) and specifying a well balanced layout of the sentence elements and the figure elements of the document in terms of conditions on the referential relationship data and the figure-element relationship data.

2. The system according to claim 1, characterized in that the figure-element relationship data indicate physical relationsships among the figure elements including a relationship of being identical to one another in physical configuration and a relationship of being similar to one another in physical configuration.

3. The system according to claim 1 or 2, characterized in that the characteristic data indicate physical characteristics of the figure elements of the document.

4. The system according to claim 3, characterized in that the physical characteristics are given in terms of numerical quantities measured from physical configurations of the figure elements.

5. The system according tao claim 1, characterized in that the figure-element relationship data indicate structural relationsships including a relationship of being identical to one another and a relationship of being similar to one another.

6. The system according to claim 1 or 5, characterized in that the characteristic data indicate structural characteristics of the figure elements of the document.

7. The system according to claim 6, characterized in that the structural characteristics are given in terms of numerical quantities measured from structures of the figure elements obtained by analyzing the structures of contents of the figure elements.

8. The system according to claim 1, characterized in that the figure-element relationship data indicate denotative relationships including a relationship of being partallel to one another in meanings of contents of the figure elements, a relationship of being contrastive to one another in meanings of contents of the figure elements, and a relationship of being equivalent to one another in meanings of contents of the figure elements.

9. The system according to claim 1 or 8, characterized in that the characteristic data indicate denotative characteristics of the figure elements of the document.

10. The system according to claim 9, characterized in that the characteristics are obtained in analyzing meanings of words contained in the figure elements.

## Patentansprüche

1. System zum Redigieren eines Dokumentes, welches Satzelemente und Figurenelemente enthält, umfassend:
eine Eingabevorrichtung (10) zur Eingabe von Daten von Satzelementen und Figurenelementen des Dokumentes;
eine Layoutbestimmungsvorrichtung (70) zur Bestimmung von Layoutpositionen und Größen von Figurenelementen des Dokumentes bezüglich von bereits angeordneten Teilen der Satzelemente und Figurenelemente; und
eine Verarbeitungsvorrichtung (71) zur Verarbeitung der Daten des Dokumentes, welche durch die Eingabevorrichtung (10) eingegeben wurden, in Übereinstimmung mit der von der Layoutbestimmungsvorrichtung (70) bestimmten Layoutposition und Größe;
**gekennzeichnet durch**
eine erste Datenextrahiervorrichtung (30) zum automatischen Extrahieren von charakteristischen Daten, welche jedes der Figurenelemente des Dokumentes charakterisieren, aus den Daten der Figurenelemente, welche durch die Eingabevorrichtung (10) eingegeben wurden; und
eine zweite Datenextrahiervorrichtung (50), welche einen Beziehungsextraktionsprozessor (51) umfaßt, und ein Beziehungsextraktionsregel-Diktionär (52), zur automatischen Extrahierung von:
referentiellen Beziehungsdaten, welche in jedem Satzelement eine Position eines bezugnehmenden Ausdrucks anzeigen, welcher auf eines der Figurenelemente bezug nimmt, und jenes Figurenelements, auf welches durch den bezugnehmenden Ausdruck bezug genommen wird, durch Suchen des bezugnehmenden Ausdrucks in den Daten der durch die Eingabevorrichtung (10) eingegebenen Satzelemente, und
Figurelement-Beziehungsdaten, welche Beziehungen jedes Figurenelementes bezüglich der anderen Figurenelemente anzeigen, durch Verwenden der charakteristischen Daten, welche durch die erste Datenextrahiervorrichtung (30) extrahiert wurden, und von vorgeschriebenen Beziehungsextraktionsregeln, welche in dem Beziehungsextraktionsregeldiktionär (52) gespeichert sind, und durch Spezifizierung der Beziehungen hinsichtlich von Bedingungen der charakteristischen Daten;
wobei die Layoutbestimmungsvorrichtung (70), welche einen Dokumentredigierprozessor (71) und ein Dokumentredigierregel-Diktionär (72) umfaßt, automatisch die Layoutposition und Größe von Figurenelementen des Dokumentes bezüglich bereits angeordneter Teile der Satzelemente und Figurenelemente bestimmt, unter Verwendung der referentiellen Beziehungsdaten und der Figurelement-Beziehungsdaten, welche durch die zweite Datenextraktionsvorrichtung (50) extrahiert wurden, und der vorgeschriebenen Dokumentredigierregeln, welche in dem Dokumentredigierregel-Diktionär (72) gespeichert sind, und durch Spezifizierung eines ausgewogenen Layouts der Satzelemente und Figurenelemente des Dokumentes abhängig von Bedingungen hinsichtlich der referentiellen Beziehungsdaten und der Figurelement-Beziehungsdaten.

2. System nach Anspruch 1,
**dadurch gekennzeichnet, daß** die Figurelement-Beziehungsdaten physikalische Beziehungen unter dem Figurelement anzeigen, einschließlich einer Beziehung des miteinander Identischsein in der physikalischen Konfiguration, und eine Beziehung des zueinander Ähnlichsein in der physikalischen Konfiguration.

3. System nach Anspruch 1 oder 2,
**dadurch gekennzeichnet**, daß die charakteristischen Daten physikalische Charakteristiken der Figurenelemente des Dokumentes angeben.

4. System nach Anspruch 3,
**dadurch gekennzeichnet**, daß die physikalischen Charakteristiken in Form von numerischen Größen gegeben sind, welche aus physikalischen Konfigurationen der Figurenelemente gemessen werden.

5. System nach Anspruch 1,
**dadurch gekennzeichnet, daß** die Figurelemente-Beziehungsdaten strukturelle Beziehungen angeben, einschließlich einer Beziehung des miteinander Identischsein und einer Beziehung des zueinander Ähnlichsein.

6. System nach einem der Ansprüche 1 oder 5,
**dadurch gekennzeichnet, daß** die charakteristischen Daten strukturelle Charakteristiken der Figurenelemente des Dokumentes angeben.

7. System nach Anspruch 6,
**dadurch gekennzeichnet, daß** die strukturellen Charakteristiken in Form von numerischen Größen gegeben sind, welche aus Strukturen der Figurenelemente gemessen werden, welche durch Analysieren der Strukturen des Inhalts der Figurenelemente erhalten werden.

8. System nach Anspruch 1,
**dadurch gekennzeichnet, daß** die Figurenelement-Beziehungsdaten Bezeichnungsbeziehungen angeben, einschließlich einer Beziehung des zueinander Parallelsein in den Bedeutungen der Inhalte der Figurenelemente, einer Beziehung des zueinander Kontrastivsein in den Bedeutungen der Inhalte der Figurenelemente, und einer Beziehung des zueinander Äquivalentsein in den Bedeutungen der Inhalte der Figurenelemente.

9. System nach einem der Ansprüche 1 bis 8,
**dadurch gekennzeichnet**, daß die charakteristischen Daten Bezeichnungscharakteristiken der Figurenelemente des Dokumentes angeben.

10. System nach Anspruch 9,
**dadurch gekennzeichnet**, daß die Charakteristiken erhalten werden durch Analysieren von Bedeutungen von in den Figurenelementen enthaltenen Wörtern.

## Revendications

1. Système pour éditer un document contenant des éléments de phrase et des éléments de figure, comprenant
un moyen d'entrée (10) pour entrer les données des éléments de phrase et des éléments de figure de document ;
un moyen de détermination de présentation (70) pour déterminer la position et la dimension de présentation des éléments de figure du document par rapport aux parties déjà présentées des éléments de phrase et des éléments de figure ; et
un moyen de traitement (71) pour traiter lesdites données de document entrées par l'intermédiaire du moyen d'entrée (10), en conformité avec la position et dimension de présentation déterminée par le moyen de détermination de présentation (70) ;
caractérisé par
un premier moyen d'extraction de données (30) pour extraire automatiquement les données caractéristiques caractérisant chacun des éléments de figure du document, à partir desdites données des éléments de figure entrées par l'intermédiaire du moyen d'entrée (10) ; et
un second moyen d'extraction de données (50) comprenant un processeur d'extraction de relations (51) et un dictionnaire de règles d'extraction de relations (52) pour extraire automatiquement :
des données de relations référentielles indiquant une position dans chaque élément de phrase d'une- expression de référence qui se réfère à un des éléments de figure et ledit un des éléments de figure référencé par l'expression de référence, en cherchant l'expression de référence dans lesdites données des éléments de phrase entrés par l'intermédiaire du moyen d'entrée (10) ; et
des données de relations figure-élément indiquant les relations de chaque élément par rapport aux autres éléments de figure, en utilisant les données caractéristiques extraites par le premier moyen d'extraction de données (30) et des règles d'extraction de relations prescrites mémorisées dans ledit dictionnaire de règles d'extraction de relations (52) et spécifiant les relations en termes de conditions sur les données caractéristiques ;
dans lequel le moyen de détermination de présentation (70) qui comprend un processeur d'édition de document (71) et un dictionnaire de règle d'édition de document (72) détermine automatiquement la position et dimension de la présentation des éléments de figure du document par rapport aux parties déjà présentées des éléments de phrase et des éléments de figure, en utilisant les données de relations référentielles et les données de relations d'éléments de figure extraites par le second moyen d'extraction de données (50) et les règle d'édition de document prescrites mémorisées dans le dictionnaire de règle d'édition de document (72) et spécifiant une présentation bien équilibrée des éléments de phrase et des éléments de figure du document en terme de conditions sur les données de relations référentielles et les données de relations figure-élément.

2. Système selon la revendication 1, caractérisé en ce que les données de relations figure-élément indiquent des relations physiques entre les éléments de figure incluant une relation d'identité mutuelle en configuration physique et une relation de similitude mutuelle en configuration physique.

3. Système selon la revendication 1 ou 2, caractérisé en ce que les données caractéristiques indiquent les caractéristiques physiques des éléments de figure du document.

4. Système selon la revendication 3, caractérisé en ce que les caractéristiques physiques sont délivrées en termes de quantités numériques mesurées à partir des configurations physiques des éléments de figure.

5. Système selon la revendication 1, caractérisé en ce que les données de relations figure-élément indiquent des relations structurelles incluant une relation d'identité mutuelle et une relation de similarité mutuelle.

6. Système selon la revendication 1 ou 5, caractérisé en ce que les données caractéristiques indiquent des caractéristiques structurelles des éléments de figure du document.

7. Système selon la revendication 6, caractérisé en ce que les caractéristiques structurelles sont délivrées en termes de quantités numériques mesurées à partir des structures des éléments de figure obtenus en analysant les structures des contenus des éléments de figure.

8. Système selon la revendication 1, caractérisé en ce que les données de relations de figure-éléments indiquent des relations dénotatives incluant une relation de parallélisme mutuel dans la signification du contenu de l'élément de figure, une relation de contraste mutuel dans la signification du contenu des éléments de figure et une relation d'équivalence mutuelle dans la signification des contenus des éléments de figure.

9. Système selon la revendication 1 ou 8, caractérisé en ce que les données caractéristiques indiquent des caractéristiques dénotatives des éléments de figure du document.

10. Système selon la revendication 9, caractérisé en ce que les caractéristiques sont obtenues en analysant les significations des mots contenues dans les éléments de figure.
